# EUROPEAN PATENT APPLICATION

(11) **EP 2 471 683 A2**
(43) Date of publication of application: **04.07.2012**
(21) Application number: 11194864.2
(22) Date of filing: 21.12.2011
(51) Int. Cl.: B60L 11/18

(54) **Systems and methods for hybrid vehicle fuel price point comparisons**

(30) Priority: 03.01.2011 US 983445
(71) Applicant: General Electric Company, Schenectady, New York 12345 (US)
(72) Inventor: Hanley, James Patrick, Atlanta, GA 30339 (US); Browne, Jeffrey Richard, Atlanta, GA 30339 (US)
(74) Representative: Illingworth-Law, William Illingworth

(57) **Abstract**

A charging station (100) for use with a hybrid vehicle (102) having at least one battery includes a communication interfce (104) configured to couple to the hybrid vehicle (102), a network interface (106) configured to communicate with at least one fuel vendor (112) and a utility (110), and a processor (116) coupled to the communication interface (104) and the network interface (106). The processor (116) is configured to receive fuel requirements from the hybrid vehicle (102) via the communication interface (104), receive a fuel price from the at least one fuel vendor (112) via the network interface (106) based on the fuel requirements, receive via the network interface (106) an energy price from the utility (110) that provides energy storable in the at least one battery, and calculate a price index for each of the at least one fuel vendor (112) and the utility (110).

## Description

### BACKGROUND OF THE INVENTION

The embodiments described herein relate generally to hybrid vehicles and, more particularly, to systems and methods that enable users to compare prices for fuel and energy for use by hybrid vehicles.

As the demand for hybrid vehicles grows in response to increasing fuel costs for conventional combustion engine vehicles and heightened concerns about global warming, it is increasingly likely that energy demand will increase in the form of electrical energy used to charge batteries or other energy sources used in such vehicles. For example, the demand on the power grid is likely to increase while the demand for fuel decreases. Such demand changes are likely to cause an increase in the price of energy from the power grid, especially during peak time periods of high demand. In addition, costs for traditional automotive fuel, such as gasoline or diesel fuel, may decrease as demand decreases. The increased demand on the power grid may also provide market demand for charging stations at conventional fueling stations, roadside rest areas, restaurants, parking garages, and other common parking areas. To determine a more cost effective fueling strategy for their vehicles, hybrid vehicle owners may consider current fuel costs and energy costs and/or the distance from a charging station to one or more nearby fuel vendors.

### BRIEF DESCRIPTION OF THE INVENTION

In one aspect, a method includes receiving fuel requirements from a hybrid vehicle having at least one battery, receiving a fuel price from at least one fuel vendor based on the fuel requirements, receiving an energy price from a utility associated with energy storable in the at least one battery, calculating a price index for each of the at least one fuel vendor and the utility, and displaying each price index to a user.

In another aspect, a charging station is provided for use with a hybrid vehicle having at least one battery. The charging station includes a communication interface configured to couple to the hybrid vehicle, a network interface configured to communicate with at least one fuel vendor and a utility, and a processor coupled to the communication interface and the network interface. The processor is configured to receive fuel requirements from the hybrid vehicle via the communication interface, receive a fuel price from the at least one fuel vendor the said network interface based on the fuel requirements, receive an energy price from the utility via the network interface, wherein the energy price relates to energy storable in the battery, and calculate a price index for each of the at least one fuel vendor and the utility.

In another aspect, a hybrid vehicle includes at least one battery, a communication interface configured to couple to a charging station, a network interface configured to communicate with at least one fuel vendor and a utility, and a processor coupled to the communication interface and the network interface. The processor is configured to transmit fuel requirements to the charging station via the communication interface, receive a fuel price from the at least one fuel vendor via the network interface based on the fuel requirements, receive an energy price from the utility via the network interface, wherein the energy price relates to an amount of power to be stored in the at least one battery, and calculate a price index for each of the at least one fuel vendor and the utility.

### BRIEF DESCRIPTION OF THE DRAWINGS

FIG. 1 is a block diagram of an exemplary electric vehicle charging station for use with a hybrid vehicle;

FIG. 2 is a simplified flow chart that illustrates an exemplary method for providing a price point fuel mileage comparison and purchase of energy and/of fuel for a hybrid vehicle using the charging station shown in FIG. 1; and

FIG. 3 is a ladder diagram that further illustrates the method shown in FIG. 2.

### DETAILED DESCRIPTION OF THE INVENTION

Exemplary embodiments of methods and apparatus for providing a price point fuel mileage comparison and purchase of energy and/of fuel for hybrid vehicles are described herein. The embodiments described herein facilitate providing hybrid vehicle owners with the ability to quickly determine a desirable fuel option, such as the cheapest option or the closest refueling option. The embodiments described herein also enable an owner to use off-peak energy pricing to charge one or more batteries within the hybrid vehicle by deferring charging until the next off-peak time period, and/or to defer charging the batteries in favor of using fuel from a fuel vendor. Moreover, these embodiments enable an owner to pre-purchase fuel from a fuel vendor. Prices and/or vendors for any two or more different types of fuel or energy may be presented to a driver to enable the driver to choose the most beneficial re-fueling option available.

As used herein, the term "hybrid vehicle" refers to a vehicle that includes more than one source of energy, such as one or more means of providing propulsion to the vehicle. Energy used to propel electric vehicles may come from various sources, such as, but not limited to an on-board rechargeable battery and/or an on-board fuel cell. In some embodiments, the hybrid vehicle is a hybrid electric vehicle that captures and stores energy generated by braking. Moreover, a hybrid electrical vehicle uses energy stored in an electrical source, such as a battery, to continue operating when at rest to conserve fuel. Some hybrid electric vehicles are capable of recharging the battery by plugging into a power receptacle, such as a general power outlet. Such vehicles include, without limitation, automobiles, trucks, buses, locomotives, and/or motorcycles. The above examples are exemplary only, and thus are not intended to limit in any way the definition and/or meaning of the term "hybrid vehicle."

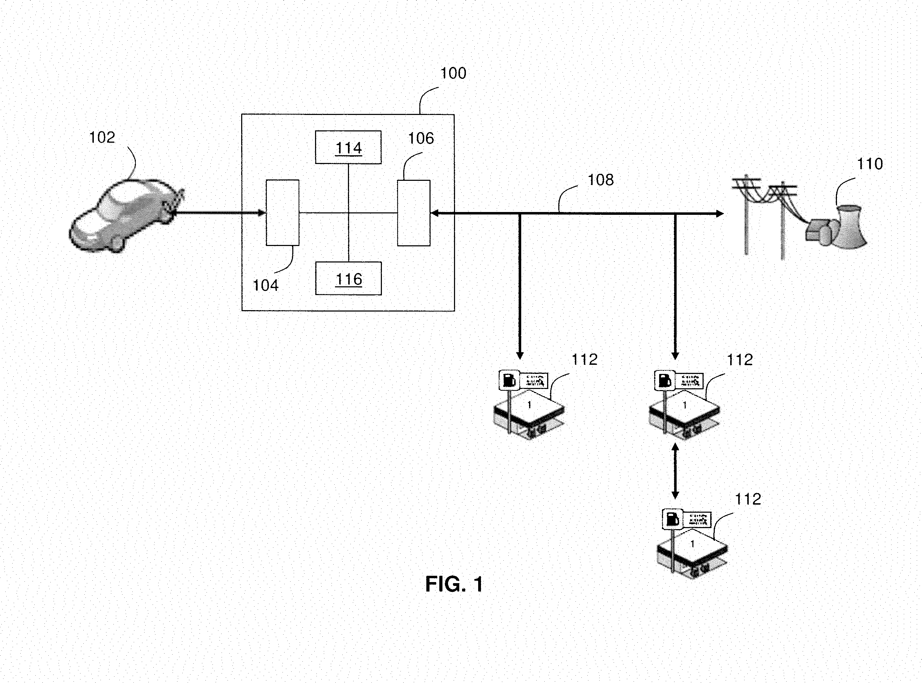

FIG. 1 is a block diagram of an exemplary electric vehicle charging station 100 for use with a hybrid vehicle 102. In the exemplary embodiment, charging station 100 includes a communication interface 104 that couples to hybrid vehicle 102. For example, communication interface 104 couples to a hybrid vehicle communication interface (not shown), that is a component of a hybrid vehicle controller (not shown) or, alternatively, that is coupled to a hybrid vehicle controller. In some embodiments, communication interface 104 enables communication between charging station 100 and hybrid vehicle 102 using the same cable or connector that provides energy to hybrid vehicle 102 for storage in one or more batteries (not shown). Alternatively, communication interface 104 enables communication between charging station 100 and hybrid vehicle 102 using a different cable or connector. Communication interface 104 may be a wired connection or a wireless connection.

Moreover, in the exemplary embodiment, charging station 100 includes a network interface 106 that couples to a network 108 to facilitate communication with one or more energy sources, such as a utility 110, and one or more fuel vendors 112, such as gasoline vendors, natural gas vendors, diesel fuel vendors, methanol vendors, or any other vendor of fuel that is suitable for use with hybrid vehicle 102. In the exemplary embodiment, network 108 is the Internet. However, any suitable network may be used for communication between charging station 100, utility 110, and fuel vendors 112, such as a virtual private network. Moreover, network interface 106 may be a wired connection or a wireless connection.

Charging station 100 also includes, or is communicatively coupled to, a memory area 114 that stores fuel requirements related to hybrid vehicle 102. For example, in the exemplary embodiment, memory area 114 stores an octane requirement, such as a minimum octane rating or a maximum octane rating, of fuel that may be used by hybrid vehicle 102. In addition, memory area 114 stores efficiency specifications for hybrid vehicle 102, such as an expected number of miles per gallon of fuel or an expected number of miles per kilowatt hour. Because of the variety of hybrid vehicles 102 that is available to consumers, memory area 114 stores fuel requirements for a number of hybrid vehicles 102 and may group or sort the fuel requirements by, for example, a manufacturer, model, and/or engine specifications of hybrid vehicle 102. Moreover, memory area 114 may store current energy and/or fuel prices received from utility 110 and/or fuel vendors 112, respectively. The stored energy and/or fuel prices may also be archived to illustrate pricing trends for use by a consumer in deciding whether to purchase energy or fuel for use by hybrid vehicle 102, as described in greater detail below. Furthermore, memory area 114 may store user-specified fuel vendors 112, such as fuel vendors 112 that are located near a user's home, office, or other specified location. The stored fuel vendor data may include location position, such as coordinates or street address, contact information, such as a phone number, email address, or web site address, or any other information that may be specified by the user. In addition, memory area 114 may store groups of fuel vendors 112, such as commonly-owned fuel vendors or franchise fuel vendors. Such information can be used by charging station 100 and/or fuel vendors 112 to track purchases by the user in a customer loyalty program, wherein the user may be rewarded with free or discounted fuel in exchange for repeat business.

Memory area 114 can include random access memory (RAM), which can include non-volatile RAM (NVRAM), magnetic RAM (MRAM), ferroelectric RAM (FeRAM) and other forms of memory. Memory area 114 may also include read only memory (ROM), flash memory and/or Electrically Erasable Programmable Read Only Memory (EEPROM). Any other suitable magnetic, optical and/or semiconductor memory, by itself or in combination with other forms of memory, may be included in memory area 114. Memory area 114 may also be, or include, a detachable or removable memory, including, but not limited to, a suitable cartridge, disk, CD ROM, DVD or USB memory. Alternatively, memory area 114 may be a database. Moreover, memory area 114 may be a component of charging station 100 or may be located remotely from charging station 100 and configured to communicate with charging station 100 via network 108. For example, memory area 114 may be a database. The term "database" refers generally to any collection of data including hierarchical databases, relational databases, flat file databases, object-relational databases, object oriented databases, and any other structured collection of records or data that is stored in a computer system. The above examples are exemplary only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

In the exemplary embodiment, charging station 100 also includes a processor 116 that is communicatively and/or operatively coupled to communication interface 104, to network interface 106, and to memory area 114 via a system bus 118. In the exemplary embodiment, processor 116 communicates with hybrid vehicle 102, such as receives fuel requirements for hybrid vehicle 102, via communication interface 104. Moreover, processor 116 communicates with utility 110 and fuel vendors 112 via network interface 106 to receive energy and fuel prices, respectively, based on the fuel requirements of hybrid vehicle 102. The term "processor" refers generally to any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term "processor."

In an alternative embodiment, at least one of communication interface 104, network interface 106, memory area 114, and/or processor 116 is installed within hybrid vehicle 102 rather than charging station 100.

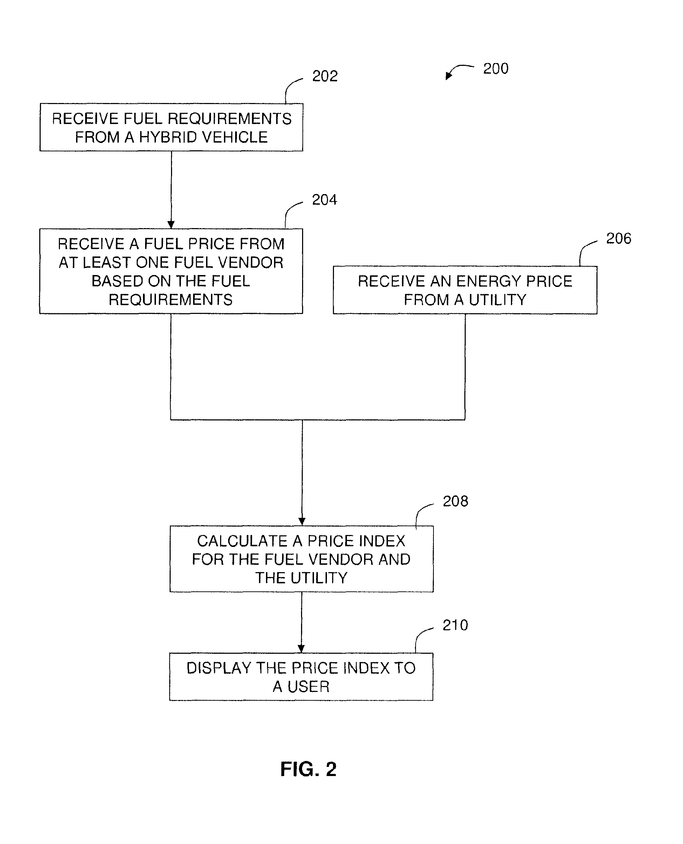

FIG. 2 is a simplified flow chart 200 that illustrates an exemplary method for use in providing a price point fuel mileage comparison and purchase of energy and/of fuel for hybrid vehicle 102 using charging station 100 (both shown in FIG. 1). In the exemplary embodiment, charging station 100 receives 202 fuel requirements from hybrid vehicle 102. For example, charging station 100 receives 202 an octane requirement, such as a minimum and/or a maximum octane rating, and/or efficiency specifications for hybrid vehicle 102. In the exemplary embodiment, charging station 100 requests the fuel requirements from hybrid vehicle 102 via communication interface 104 (shown in FIG. 1) and receives 202 the fuel requirements from hybrid vehicle 102 via communication interface 104. Moreover, if hybrid vehicle 102 responds with an error, or if the communication times out, charging station 100 searches for an identifier for hybrid vehicle 102 in memory area 114 (shown in FIG. 1) and determines the fuel requirements based on, for example, a manufacturer, model, or engine model of hybrid vehicle 102.

In the exemplary embodiment, charging station 100 also receives 204 a fuel price, such as a price per unit of volume measurement, from one or more fuel vendors 112 (shown in FIG. 1) via network interface 106. In some embodiments, charging station 100 determines a location of hybrid vehicle 102 or charging station 100 and locates fuel vendors 112 that are within a preselected distance of the present location. Charging station 100 then requests a fuel price from fuel vendors 112 within the preselected distance based on the fuel requirements, and receives 204 the fuel price from each fuel vendor 112. Alternatively, charging station 100 receives a list of user-specified fuel vendors 112. Charging station 100 then requests a fuel price from the user-specified fuel vendors 112 based on the fuel requirements, and receives 204 the fuel price from each user-specified fuel vendor 112.

Similarly, charging station 100 receives 206 an energy price, such as a price per kilowatt hour, from utility 110 (shown in FIG. 1) via network interface 106. In some embodiments, charging station 100 determines the nearest utility 110 based on the location of hybrid vehicle 102 or charging station 100. Alternatively, charging station 100 determines a utility 110 based on an identifier of the local utility 110 that manages the local power grid and/or based on an account with utility 110 in the name of the driver. In the exemplary embodiment, charging station 100 requests the energy price from utility 110, and receives 206 the energy price via network interface 106. Alternatively, charging station 100 is pre-programmed with an identifier of utility 110. Charging station 100 requests the energy price from the pre-programmed utility 100, and receives 206 the energy price via network interface 106. Furthermore, charging station 100 may receive an identifier of utility 110 from hybrid vehicle 102, such as utility 110 used at the user's home, office, or any other location. Charging station 100 requests the energy price from the identified utility 100, and receives 206 the energy price via network interface 106.

In the exemplary embodiment, and based on the received fuel prices and energy price, charging station 100 calculates 208 a price index for fuel vendors 112 and utility 110. The price index may include a number of miles or other unit of distance that hybrid vehicle 102 is expected to traverse per a unit of currency, based on the fuel requirements. For example, charging station 100 calculates a number of miles per dollar that hybrid vehicle 102 is expected to traverse using electrical energy received from utility 110 and using fuel received from fuel vendors 112. The price index may also include an expected price to fully charge hybrid vehicle batteries using electrical energy received from utility 110, and an expected price to fill a fuel tank of hybrid vehicle 102 using fuel received from fuel vendors 112. In the exemplary embodiment, charging station 102 displays 210 the price index to the user. For example, the price index may be displayed 210 as a table via a display device. In some embodiments, the display includes user input buttons to enable the user to select a particular fuel vendor 112 or to select to receive electrical energy from utility 110.

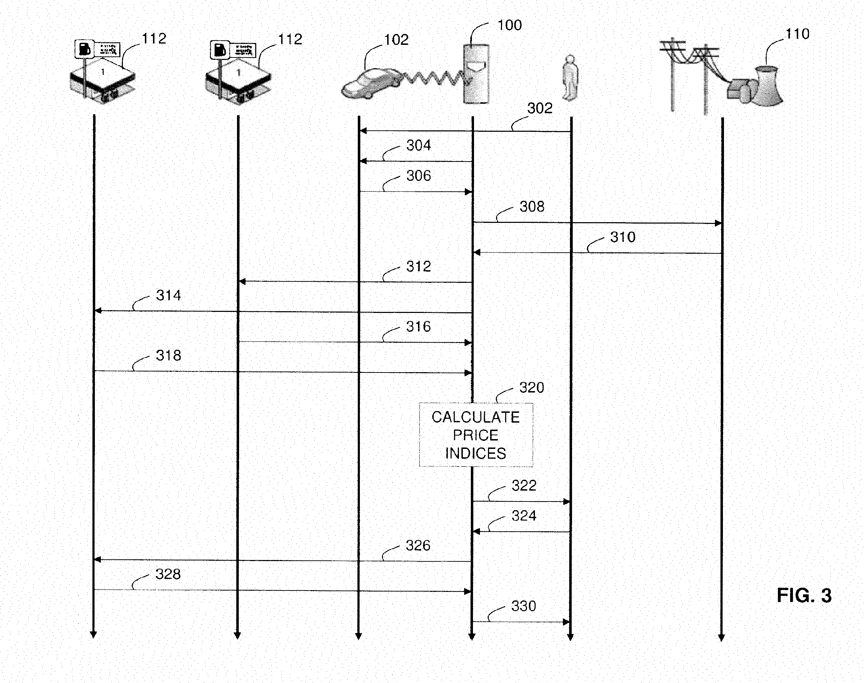

FIG. 3 is a ladder diagram 300 that further illustrates the method illustrated in FIG. 2. As shown in FIG. 3, a user connects 302 hybrid vehicle 102 to charging station 100 (both shown in FIG. 1). In some embodiments, when charging station 100 detects that hybrid vehicle 102 is connected, charging station 100 debounces the connection to remove noise, such as ripple, from signals that are transmitted by and/or received by charging station 100. In the exemplary embodiment, charging station 100 transmits 304 a request message via communication interface 104 (shown in FIG. 1) to hybrid vehicle 102 to describe the fuel requirements of hybrid vehicle 102, including an octane requirement and/or fuel efficiency specifications. Moreover, in the exemplary embodiment, charging station 100 then receives 306 a response message from hybrid vehicle 102 via communication interface 104, including the fuel requirements. In an alternative embodiment, charging station 100 receives an error message from hybrid vehicle 102 via communication interface 104 if hybrid vehicle 102 detects an error in the request message or cannot determine its fuel requirements. In such an embodiment, charging station 100 determines the fuel requirements by searching in memory area 114 (shown in FIG. 1) using an identifier for hybrid vehicle 102. In another alternative embodiment, and when charging station 100 receives no response message from hybrid vehicle 102 or does not receive a response message within a preselected time period, charging station 100 determines the fuel requirements by searching memory area 114. In some embodiments, charging station 100 stores the fuel requirements in memory area 114 in association with an identifier for hybrid vehicle 102.

In the exemplary embodiment, charging station 100 transmits 308 a request message via network interface 106 to utility 110 for an energy price according to a price schedule. The price schedule includes, for example, a peak price for energy at times of high demand from utility 110 and an off-peak price for energy at times of low demand from utility 110. Moreover, charging station 100 receives 310 a response message via network interface 106 from utility 110 that includes the energy price and a validity time period that indicates a length of time during which the energy price is valid. In one embodiment, charging station 100 stores the energy price in memory area 114 in association with an identifier for utility 110. In such an embodiment, charging station 100 attempts to determine the energy price for utility 110 from memory area 114 before transmitting 308 the request message.

Moreover, and in the exemplary embodiment, charging station 100 transmits 312 a request message via network interface 106 to one or more localized fuel vendors 112. For example, charging station 100 determines its location using, for example, an internet protocol (IP) address, cellular antenna triangulation, global positioning systems (GPS), or by reading a pre-stored location. Alternatively, hybrid vehicle 102 may determine its location and transmit the location to charging station 100. In the exemplary embodiment, charging station 100 determines one or more fuel vendors 112 that are within a preselected distance of charging station 100 or hybrid vehicle 102. Charging station 100 transmits 312 the request message to the localized fuel vendors 112 for a fuel price at each fuel vendor 112. In addition, charging station 100 transmits 314 a request message via network interface 106 to one or more user-specified fuel vendors 112. For example, charging station 100 may receive a list of user-specified fuel vendors 112 from hybrid vehicle 100 and transmit 314 a request message to each listed fuel vendor 112 for a respective fuel price. In some embodiments, the user-specified fuel vendors 112 are a set of franchise-affiliated fuel vendors 112. Each fuel vendor 112 responds with a response message that is received 316 and 318 by charging station 100 via network interface 106. The response message may include, but is not limited to only including, a price of fuel per unit volume, such as a price per gallon, an expected maximum price for over a specified time frame, and a location or address of each fuel vendor 112.

In the exemplary embodiment, charging station 100 calculates 320 a price index based on the energy price received from utility 110 and the fuel prices received from fuel vendors 112. For example, the price index may include a number of miles or other unit of distance that hybrid vehicle 102 is expected to traverse per a unit of currency, based on the fuel requirements. For example, charging station 100 calculates a number of miles per dollar that hybrid vehicle 102 is expected to traverse using electrical energy received from utility 110 and using fuel received from fuel vendors 112. The price index may also include an expected price to fully charge hybrid vehicle batteries using electrical energy received from utility 110, and an expected price to fill a fuel tank of hybrid vehicle 102 using fuel received from fuel vendors 112.

Moreover, the price index is displayed 322 to the user at charging station 100 and/or hybrid vehicle 102. For example, the price index may include an identification of utility 110 and fuel vendors 112, and charging or fueling location of each. Moreover, the price index may include a time period during which the prices are available and a distance from charging station 100 or hybrid vehicle 102. The price map may also include the calculated price per volume of fuel, such as a price per gallon, and the calculated price per unit of energy, such as a price per kilowatt hour. In some embodiments, charging station 100 also calculates an expected distance per unit of currency, such as a number of miles per dollar, based on the efficiency data of hybrid vehicle 102 and the respective prices of energy from utility 110 and fuel from fuel vendors 112. Furthermore, charging station 100 may calculate a cost to fully charge a battery (not shown) or to fill a fuel tank (not shown) based on the efficiency data of hybrid vehicle 102 and the respective prices of energy from utility 110 and fuel from fuel vendors 112.

In some embodiments, a user may "subscribe" to fuel vendors 112 in a specified area or to any fuel vendor 112 affiliated with a specified franchise to enable the user to make an informed decision if charging hybrid vehicle 102 makes more economic sense than buying fuel at fuel vendor 112. For example, fuel vendors 112 may offer a discount or customer loyalty program that provides the user with discounted or free fuel after the purchase of a predetermined amount of fuel.

Moreover, the user may pre-purchase 324 fuel from a particular fuel vendor 112 using a virtual button. For example, the user may pre-purchase 324 fuel at the current price and may claim the purchased fuel at fuel vendor 112 within a specified time period regardless of later fluctuations in the price. The pre-purchase transaction may use a credit card, debit card, or any suitable bank account that can be electronically accessed by charging station 100 or fuel vendor 112. Charging station 100 transmits 326 a purchase request message to the select fuel vendor 112. For example, charging station 100 transmits 326 a purchase request message to an encrypted and secured web-service that is operated by or for fuel vendor 112. The purchase request message includes the user's billing information, such as the user's name, credit or debit card account number, card expiration date, and/or billing address of the user. Fuel vendor 112 replies 328 with a purchase response message indicating whether the transaction was successful or unsuccessful. Charging station 100 displays 330 the results of the transaction to the user. In an alternative embodiment, the price index is displayed to the user by hybrid vehicle 102, such as by a display screen (not shown) within hybrid vehicle 102.

Similarly, the user may direct charging station 100 to provide electrical energy to hybrid vehicle 102 from utility 110 using a virtual button. For example, the user may select a first virtual button that causes charging station 100 to provide energy to hybrid vehicle 102 during the next off-peak time. Alternatively, the user may select a second virtual button that causes charging station 100 to provide energy to hybrid vehicle 102 during the current peak time or off-peak time.

In one embodiment, hybrid vehicle 102 includes a mapping device (not shown), such as a GPS unit, that indicates a current route to the driver between an initial location and a destination. In such an embodiment, the mapping device can communicate with, for example, charging station 100 via a communication network, such as a cellular network and/or the Internet. Moreover, the mapping device transmits the known route to a local charging station 100, such as a charging station 100 that is closest to the known route. Charging station 100 determines locations of fuel vendors 112 and/or other charging stations 100 along the known route, and transmits the list to hybrid vehicle 102 for display to the driver as described above.

Exemplary embodiments of methods and apparatus for providing a price point fuel mileage comparison and purchase of energy and/of fuel for hybrid vehicles are described above in detail. The methods and apparatus are not limited to the specific embodiments described herein but, rather, operations of the methods and/or components of the system and/or apparatus may be utilized independently and separately from other operations and/or components described herein. Further, the described operations and/or components may also be defined in, or used in combination with, other systems, methods, and/or apparatus, and are not limited to practice with only the systems, methods, and storage media as described herein.

A processor, such as those described herein, includes at least one processor or processing unit and a system memory. The processor typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although the present invention is described in connection with an exemplary hybrid vehicle charging system environment, embodiments of the invention are operational with numerous other general purpose or special purpose hybrid vehicle charging system environments or configurations. The hybrid vehicle charging system environment is not intended to suggest any limitation as to the scope of use or functionality of any aspect of the invention. Moreover, the hybrid vehicle charging system environment should not be interpreted as having any dependency or requirement relating to any one or combination of components illustrated in the exemplary operating environment.

Exemplary technical effects of the systems and methods described herein include at least one of: (a) electronically receiving fuel requirements from a hybrid vehicle that includes at least one battery; (b) electronically receiving a fuel price from one or more fuel vendors based on the fuel requirements; (c) receiving an energy price from a utility configured to provide energy for storage by the battery; (d) calculating price indices for each of the fuel vendor and the utility; (e) displaying the price indices to a user of the hybrid vehicle for use in providing the user with the ability to quickly determine a desirable fuel option.

Embodiments of the invention may be described in the general context of computer-executable instructions, such as program components or modules, executed by one or more computers or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in the embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method comprising:
   receiving fuel requirements from a hybrid vehicle having at least one battery;
   receiving a fuel price from at least one fuel vendor based on the fuel requirements;
   receiving an energy price from a utility associated with energy storable in the at least one battery;
   calculating a price index for each of the at least one fuel vendor and the utility; and
   displaying each price index to a user.
2. A method in accordance with Clause 1, wherein receiving fuel requirements comprises receiving at least one of an octane requirement and efficiency specifications of the hybrid vehicle.
3. A method in accordance with Clause 1 or Clause 2, wherein receiving fuel requirements comprises retrieving the fuel requirements from a memory area.
4. A method in accordance with any preceding Clause, wherein receiving a fuel price comprises:
   determining a location of the hybrid vehicle;
   determining at least one fuel vendor located within a preselected distance from the location; and
   receiving the fuel price from the at least one fuel vendor.
5. A method in accordance with any preceding Clause, wherein receiving a fuel price comprises receiving the fuel price from a user-defined list of fuel vendors.
6. A method in accordance with any preceding Clause, wherein calculating a price index comprises calculating a first price per unit distance for fuel from the at least one fuel vendor and a second price per unit distance for energy from the utility.
7. A method in accordance with any preceding Clause, further comprising transmitting a purchase request to one of the at least one fuel vendor and the utility.
8. A charging station for use with a hybrid vehicle having at least one battery, said charging station comprising:
   a communication interface configured to couple to the hybrid vehicle;
   a network interface configured to communicate with at least one fuel vendor and a utility; and
   a processor coupled to said communication interface and said network interface, said processor configured to:
      receive fuel requirements from the hybrid vehicle via said communication interface;
      receive a fuel price from the at least one fuel vendor via said network interface based on the fuel requirements;
      receive an energy price from the utility via said network interface, wherein the energy price relates to energy storable in the battery; and
      calculate a price index for each of the at least one fuel vendor and the utility.
9. A charging station in accordance with any preceding Clause, wherein said processor is configured to receive at least one of an octane requirement and efficiency specifications of the hybrid vehicle.
10. A charging station in accordance with any preceding Clause, wherein said processor is further configured to retrieve the fuel requirements from a memory area.
11. A charging station in accordance with any preceding Clause, wherein said processor is further configured to:
   determine a location of the hybrid vehicle;
   determine at least one fuel vendor located within a preselected distance from the location; and
   receive the fuel price from the at least one fuel vendor.
12. A charging station in accordance with any preceding Clause, wherein said processor is further configured to receive the fuel price from a user-defined list of fuel vendors.
13. A charging station in accordance with any preceding Clause, wherein said processor is configured to calculate a first price per unit distance for fuel from the at least one fuel vendor and a second price per unit distance for energy from the utility.
14. A charging station in accordance with any preceding Clause, wherein said processor is further configured to transmit a purchase request to one of the at least one fuel vendor and the utility.
15. A hybrid vehicle comprising:
   at least one battery;
   a communication interface configured to couple to a charging station;
   a network interface configured to communicate with at least one fuel vendor and a utility; and
   a processor coupled to said communication interface and said network interface, said processor configured to:
      transmit fuel requirements to the charging station via said communication interface;
      receive a fuel price from the at least one fuel vendor via said network interface based on the fuel requirements;
      receive an energy price from the utility via said network interface, wherein the energy price relates to an amount of power to be stored in said at least one battery; and
      calculate a price index for each of the at least one fuel vendor and the utility.
16. A hybrid vehicle in accordance with any preceding Clause, wherein said processor is configured to transmit at least one of an octane requirement and efficiency specifications of said hybrid vehicle.
17. A hybrid vehicle in accordance with any preceding Clause, wherein said processor is further configured to:
   determine a location of said hybrid vehicle;
   determine at least one fuel vendor located within a preselected distance from the location; and
   receive the fuel price from the at least one fuel vendor.
18. A hybrid vehicle in accordance with any preceding Clause, wherein said processor is further configured to receive the fuel price from a user-defmed list of fuel vendors.
19. A hybrid vehicle in accordance with any preceding Clause, wherein said processor is configured to calculate a first price per unit distance for fuel from the at least one fuel vendor and a second price per unit distance for energy from the utility.
20. A hybrid vehicle in accordance with any preceding Clause, wherein said processor is further comprising transmitting a purchase request to one of the at least one fuel vendor and the utility.

## Claims

1. A charging station (100) for use with a hybrid vehicle (102) having at least one battery, said charging station (100) comprising:
a communication interface (104) configured to couple to the hybrid vehicle (102);
a network interface (106) configured to communicate with at least one fuel vendor (112) and a utility (110); and
a processor (116) coupled to said communication interface (104) and said network interface (106), said processor (116) configured to:
receive fuel requirements from the hybrid vehicle (102) via said communication interface (104);
receive a fuel price from the at least one fuel vendor (112) via said network interface (106) based on the fuel requirements;
receive an energy price from the utility (110) via said network interface (106), wherein the energy price relates to energy storable in the battery; and
calculate a price index for each of the at least one fuel vendor (112) and the utility (110).

2. A charging station (100) in accordance with Claim 1, wherein said processor (116) is configured to receive at least one of an octane requirement and efficiency specifications of the hybrid vehicle (102).

3. A charging station (100) in accordance with Claim 1 or Claim 2, wherein said processor (116) is further configured to retrieve the fuel requirements from a memory area (114).

4. A charging station (100) in accordance with any preceding Claim, wherein said processor (116) is further configured to:
determine a location of the hybrid vehicle (102);
determine at least one fuel vendor (112) located within a preselected distance from the location; and
receive the fuel price from the at least one fuel vendor (112).

5. A charging station (100) in accordance with any preceding Claim, wherein said processor (116) is further configured to receive the fuel price from a user-defined list of fuel vendors (112).

6. A charging station (100) in accordance with any preceding Claim, wherein said processor (116) is configured to calculate a first price per unit distance for fuel from the at least one fuel vendor (112) and a second price per unit distance for energy from the utility (110).

7. A charging station (100) in accordance with any preceding Claim, wherein said processor (116) is further configured to transmit a purchase request to one of the at least one fuel vendor (112) and the utility (110).

8. A hybrid vehicle (102) comprising:
at least one battery;
a communication interface (104) configured to couple to a charging station (100);
a network interface (106) configured to communicate with at least one fuel vendor (112) and a utility (110); and
a processor (116) coupled to said communication interface (104) and said network interface (106), said processor (116) configured to:
transmit fuel requirements to the charging station (100) via said communication interface (104);
receive a fuel price from the at least one fuel vendor (112) via said network interface (106) based on the fuel requirements;
receive an energy price from the utility (110) via said network interface (106), wherein the energy price relates to an amount of power to be stored in said at least one battery; and
calculate a price index for each of the at least one fuel vendor (112) and the utility (110).

9. A hybrid vehicle (102) in accordance with Claim 8, wherein said processor (116) is configured to transmit at least one of an octane requirement and efficiency specifications of said hybrid vehicle (102).

10. A hybrid vehicle (102) in accordance with Claim 8 or Claim 9, wherein said processor (116) is further configured to:
determine a location of said hybrid vehicle (102);
determine at least one fuel vendor (112) located within a preselected distance from the location; and
receive the fuel price from the at least one fuel vendor (112).

11. A hybrid vehicle (102) in accordance with any of Claims 8 to 10, wherein said processor (116) is further configured to receive the fuel price from a user-defined list of fuel vendors (112).

12. A hybrid vehicle (102) in accordance with any of Claims 8 to 11, wherein said processor (116) is configured to calculate a first price per unit distance for fuel from the at least one fuel vendor (112) and a second price per unit distance for energy from the utility (110).

13. A hybrid vehicle (102) in accordance with any of Claims 8 to 12, wherein said processor (116) is further comprising transmitting a purchase request to one of the at least one fuel vendor (112) and the utility (110).

14. A method comprising:
receiving fuel requirements from a hybrid vehicle having at least one battery;
receiving a fuel price from at least one fuel vendor based on the fuel requirements;
receiving an energy price from a utility associated with energy storable in the at least one battery;
calculating a price index for each of the at least one fuel vendor and the utility; and
displaying each price index to a user.

15. A method in accordance with Claim 14, wherein receiving fuel requirements comprises receiving at least one of an octane requirement and efficiency specifications of the hybrid vehicle.
